# NEUE EUROPÄISCHE PATENTSCHRIFT

(11) **EP 2 875 283 B2**
(45) Veröffentlichungstag und Bekanntmachung des Hinweises auf die Entscheidung über den Einspruch: **01.05.2019**
(45) Hinweis auf die Patenterteilung: 01.06.2016
(21) Anmeldenummer: 13741656.6
(22) Anmeldetag: 26.06.2013
(51) Int. Cl.: F21S 41/143, F21S 41/24, F21S 41/32, F21S 41/663

(54) **LEUCHTEINHEIT FÜR EINEN SCHEINWERFER**
LIGHTING UNIT FOR A HEADLIGHT
UNITÉ LUMINESCENTE POUR UN PROJECTEUR

(30) Priorität: 18.07.2012 AT 502842012
(43) Veröffentlichungstag der Anmeldung: 27.05.2015
(73) Patentinhaber: ZKW Group GmbH, 3250 Wieselburg (AT)
(72) Erfinder: HÖLZL, Andreas, A-3250 Wieselburg (AT); DATZREITER, Markus, 3374 Säusenstein (AT); KRENN, Irmgard, A-3251 Purgstall/Erlauf (AT); HONAUER, Gerhard, A-3261 Wolfpassing (AT)
(74) Vertreter: Patentanwaltskanzlei Matschnig & Forsthuber OG
(86) Internationale Anmeldenummer: PCT/AT2013/050130
(87) Internationale Veröffentlichungsnummer: WO 2014/012128

(56) Entgegenhaltungen:
- EP-A1- 1 396 753
- EP-A2- 2 103 867
- EP-A2- 2 306 073
- WO-A1-2004/045445
- AT-A4- 510 437
- DE-B3-102009 053 581
- US-A1- 2005 117 366
- US-A1- 2007 008 734
- US-A1- 2008 253 144
- US-A1- 2009 016 074
- US-B1- 6 527 411

## Beschreibung

Die Erfindung betrifft eine Leuchteinheit für einen Scheinwerfer, insbesondere einen Fahrzeugscheinwerfer, bestehend aus einer Mehrzahl von Lichtquellen und einer Lichtführungseinheit mit einer Mehrzahl von Lichtführungen.

Derartige Leuchteinheiten sind im Fahrzeugbau gebräuchlich und dienen der Abbildung von blendfreiem Fernlicht, indem das Licht, das in der Regel von einer Mehrzahl von künstlichen Lichtquellen ausgestrahlt wird, von einer entsprechenden Mehrzahl von nebeneinander angeordneten Lichtführungen in Abstrahlrichtung gebündelt wird. Die Lichtführungen weisen einen relativ geringen Querschnitt auf und senden das Licht der ihnen je zugeordneten einzelnen Lichtquellen daher sehr konzentriert in die Abstrahlrichtung aus. In der AT 510 437 A4 ist in diesem Zusammenhang ein Lichtmodul offenbart, welches eine Lichtführung in Form eines Lichtleiters, dort als Lichttunnel bezeichnet, sowie eine Mehrzahl von Lichtquellen aufweist.

In US2005/0117366 ist eine gattungsgemäße Leuchteinheit offenbart, welche eine Mehrzahl von Leuchtdioden und eine entsprechende Mehrzahl von Lichtfasern umfasst.

Im Rahmen der Erfindung bevorzugte Lichtquellen sind insbesondere lichtemittierende Dioden (LEDs), die sich durch eine hohe Lichtleistung bei einer sehr geringen Baugröße auszeichnen. Für die genannte Anwendung übliche LEDs weisen Kantenlängen im Bereich von einem Millimeter und weniger auf und werden in einer Matrix, d.h. in Gruppen auf einer gemeinsamen Platine unmittelbar nebeneinander angeordnet, wobei die äußere Form dieser Matrix bzw. Gruppen dem Lichtbild entspricht, das projiziert werden soll. Dadurch, dass die Lichtführungen in der Lichtführungseinheit ebenfalls unmittelbar nebeneinander angeordnet sind, um bei einer gegebenen Größe der einzelnen Lichtquellen ein homogenes Lichtbild zu erzeugen, sind die Wände zwischen den einzelnen, beispielsweise als Reflektoren ausgebildeten Lichtführungen zwangsläufig sehr dünn. Dies führt zu einem erhöhten Aufwand bei der Fertigung der Lichtführungseinheiten, die in aller Regel durch Spritzgießen hergestellt werden. Weiters stellt bei dünnen Wänden zwischen den Lichtführungen der Wärmeeintrag der verwendeten Lichtquellen ein Problem dar, wenn insbesondere bei Spritzgußteilen die Verformungstemperatur des verwendeten Thermoplasten erreicht wird, oder der verwendete Werkstoff anderweitig thermischen Schaden nimmt. Ein weiterer Nachteil bei derartigen Lichtführungseinheiten besteht darin, dass bei den geringen Querschnitten der Lichtführungen das gleichmäßige Beschichten der Reflektoroberflächen nicht mehr zuverlässig gelingt, da der zum Aufbringen der Schicht eingesetzte Aluminiumdampf beim Bedampfen nicht in die gesamte Tiefe der Lichtführungen verteilt werden kann.

Es ist daher Aufgabe der vorliegenden Erfindung, eine Leuchteinheit der eingangs genannten Art derart zu verbessern, dass die erwähnten Nachteile vermieden werden.

Diese Aufgabe wird erfindungsgemäß durch eine Leuchteinheit gemäß Anspruch 1 gelöst. Bei der erfindungsgemäßen Leuchteinheit besteht die Lichtführungseinheit somit aus zumindest zwei Teilen, die so angeordnet sind, dass die Lichtführungseinheit quer zur Licht-Abstrahlrichtung der Lichtführungseinheit zumindest zweigeteilt ist. Die Lichtführungen sind somit in ihrer Länge ebenfalls zweigeteilt, sodass bei der Herstellung kürzere Abschnitte der Lichtführungen gegossen werden können. Mit anderen Worten bedeutet dies, dass die jeweiligen Lichtführungen sowohl im lichtquellenseitigen Teil der Lichtführungseinheit als auch im abstrahlseitigen Teil der Lichtführungseinheit angeordnet sind. Dies vermindert das Risiko von Fehlgüssen und gestattet die Verwendung von Werkstoffen für die unterschiedlichen Teile der Lichtführungseinheit, die je nach Bedarf hinsichtlich ihrer Fließeigenschaften optimiert sind bzw. hinsichtlich ihrer Hitzebeständigkeit gewählt werden können.

Dies ermöglicht bei gegebener Geometrie der Lichtführungen eine erhöhte Hitzebeständigkeit der den Lichtquellen zugewandten Teile der Lichtführungseinheit bei einem relativ geringen Herstellungsaufwand. In diesem Zusammenhang ist es gemäß einer bevorzugten Ausführungsform der vorliegenden Erfindung vorgesehen, dass der lichtquellenseitige Teil der Lichtführungseinheit unmittelbar an die Lichtquellen anschließt. Dies führt zu einer mehr oder weniger vollständigen Abstrahlung des Lichts der Lichtquellen in die Lichtführungen, wodurch eine optimierte Lichtausbeute erzielt wird.

Bevorzugt ist es vorgesehen, dass der lichtquellenseitige Teil der Lichtführungseinheit aus einem hitzebeständigeren Material als der abstrahlseitige Teil der Lichtführungseinheit gefertigt ist. Das hitzebeständige Material kann hierbei ein besonders hitzefester Kunststoff sein, wobei auch Duroplaste verarbeitet werden können. Darüber hinaus ist es auch denkbar, den lichtquellenseitigen Teil der Lichtführungseinheit aus Keramik, aus Metall oder aus mineralischem Glas zu fertigen.

Die hohe Flexibilität hinsichtlich der Wahl der Werkstoffe kann jedoch auch für den abstrahlseitigen Teil der Lichtführungseinheit in Anspruch genommen werden. Gemäß einer bevorzugten Ausführungsform ist es daher vorgesehen, dass der abstrahlseitige Teil der Lichtführungseinheit aus einem fließfähigeren Thermoplast als der lichtquellenseitige Teil der Lichtführungseinheit gefertigt ist. Besonders fließfähige Thermoplaste sind in aller Regel weniger temperaturbeständig als viskosere Materialien, jedoch erlaubt es die spezielle Ausgestaltung der Lichtführungseinheit gemäß der vorliegenden Erfindung, die Wärme der Lichtquellen mit dem lichtquellenseitige Teil der Lichtführungseinheit aufzunehmen und über diesen zu dissipieren, sodass auf der Abstrahlseite keine kritischen Temperaturen auftreten.

Um die Leistung der Lichtführungseinheit zu optimieren, ist es bevorzugt vorgesehen, dass Reflektorflächen der Lichtführungen reflektierend beschichtet, insbesondere mit Aluminium beschichtet sind. Die Beschichtung von Reflektorflächen erfolgt zumeist durch Bedampfen, wobei die erfindungsgemäße Teilung der Lichtführungseinheit auch hierbei hinsichtlich einer möglichst gleichmäßigen Beschichtung der Reflektorflächen vorteilhaft gegenüber dem Stand der Technik ist, da der Aluminiumdampf leicht in die unterteilten, und somit relativ kurzen Lichtführungen im lichtquellenseitigen Teil und im abstrahlseitigen Teil der Lichtführungseinheit vordringt.

Um möglichst wenig Licht an den Trennflächen der Teile der Lichtführungseinheit, die erfindungsgemäß von den Lichtführungen durchsetzt wird, zu streuen, was die Lichtleistung der Leuchteinheit vermindern würde, ist es gemäß einer bevorzugten Ausführungsform der vorliegenden Erfindung vorgesehen, dass der lichtquellenseitige Teil der Lichtführungseinheit und der abstrahlseitige Teil der Lichtführungseinheit Festlegungsmittel zum Festlegen der beiden Teile der Lichtführungseinheit in ihrer relativen Position quer zur Abstrahlrichtung aufweisen. Auf diese Weise kann schon bei der Konstruktion und beim Guss bzw. bei der anderweitigen Fertigung der Teile der Lichtführungseinheit dafür Sorge getragen werden, dass die Teile der Lichtführungseinheit zuverlässig so zusammengesetzt werden können, dass die Reflektorflächen fluchtend aneinander liegen und die Lichtführungen somit in ihrem Inneren möglichst keine Kanten oder Stufen aufweisen, an denen das Licht der Lichtquellen gestreut oder blockiert wird. Gemäß einer bevorzugten Ausführungsform der vorliegenden Erfindung weisen der lichtquellenseitige Teil der Lichtführungseinheit Referenzierzapfen und der abstrahlseitige Teil der Lichtführungseinheit diesen zugeordnete Referenzbohrungen auf. Die Referenzierzapfen und die entsprechenden Referenzbohrungen sorgen zusätzlich für eine fluchtende Ausrichtung der beiden Teile der Lichtführungseinheit zueinander. Im Sinne der vorliegenden Erfindung sollen von dieser Formulierung auch kinematische Umkehrungen dieses Prinzips erfasst sein.

Um die bereits beschriebenen Vorteile hinsichtlich des Spritzgießens und hinsichtlich des Beschichtens der Lichtführungen für beide Teile der Lichtführungseinheit optimal nützen zu können, ist die Erfindung dahingehend weitergebildet, dass der lichtquellenseitige Teil der Lichtführungseinheit und der abstrahlseitige Teil der Lichtführungseinheit an gekrümmten und einander entsprechenden Flächen in ihrer relativen Position zueinander festgelegt sind. Die Lichtführungen in der Lichtführungseinheit sind unterschiedlich tief, sodass die Lichtauskoppelflächen der einzelnen Lichtführungen in einer gekrümmten Ebene angeordnet sind, wie weiter unten noch näher erläutert wird. Die Tiefenunterschiede können auf die beiden Teile der Lichtführungseinheit aufgeteilt werden, sodass in der Folge jeweils möglichst geringe Tiefen gegossen und beschichtet werden müssen.

Erfindungsgemäß weist der abstrahlseitige Teil der Lichtführungseinheit eine Mehrzahl von Lichtleitern auf. Unter einem Lichtleiter ist im Sinne der vorliegenden Erfindung eine Struktur zu verstehen, in der einfallendes Licht zum einen durch Totalreflexion an den Wänden reflektiert wird und in der zum anderen eine Beugung des Lichts zum Lot des Lichtleiters erfolgt. Im vorliegenden Fall dient der Lichtleiter dazu, das Licht aus den Lichtführungen zu sammeln und in Richtung eines eventuell nachgeordneten optischen Systems, beispielsweise in Form einer Linse abzustrahlen. Hier erweist sich die erfindungsgemäße Teilung der Lichtführungseinheit als vorteilhaft, wenn das Material der Lichtleiter empfindlich gegenüber Hitze ist. In diesem Zusammenhang ist es bevorzugt, dass die Lichtleiter aus einem transparenten Kunststoff gefertigt sind. Es kann somit auf die Verwendung von teurem Glas verzichtet werden, da der Wärmeeintrag in die Lichtleiter bei der erfindungsgemäßen Leuchteinheit entsprechend gering gehalten werden kann.

Zusätzlich kann auch vorgesehen sein, dass der lichtquellenseitige Teil der Lichtführungseinheit eine Mehrzahl von Lichtleitern aufweist. Dies ist mit der vorliegenden Erfindung je nach der optischen Aufgabestellung leicht realisierbar, solange der Hitzeeintrag der Lichtquellen in den lichtquellenseitigen Teil der Lichtführungseinheit nicht zu groß ist.

Bevorzugt kann es vorgesehen sein, dass je ein Lichtleiter am abstrahlseitigen Teil der Lichtführungseinheit je einer Lichtführung, insbesondere einem Reflektor am lichtquellenseitigen Teil der Lichtführungseinheit zugeordnet ist, wodurch das Licht aus jeder der Lichtführungen optimiert weitergeleitet werden kann. Aus fertigungstechnischen Gründen kann es hierbei notwendig sein, die den Lichtführungen zugeordneten Lichtleiter abstrahlseitig zu einer gemeinsamen abstrahlseitigen Stirnplatte zusammenzufassen. Die Lichtauskoppelflächen der einzelnen Lichtleiter liegen in diesem Fall an der abstrahlseitigen Oberfläche der abstrahlseitigen Stirnplatte. Die abstrahlseitige Oberfläche der Stirnplatte ist gekrümmt und folgt der Bildfeldwölbung der nachgeordneten Linse, sodass alle Lichtauskoppelflächen der einzelnen Lichtführungen von der Linse scharf auf die Strasse projiziert werden können.

Bevorzugt ist es vorgesehen, dass eine lichtquellenseitige Oberfläche des lichtquellenseitigen Teils der Lichtführungseinheit mit Aluminium beschichtet und nicht reflektierend lackiert ist. Auf diese Weise werden unerwünschte Reflexionen, die zu Streulicht führen können, verhindert.

Optional ist es bei der vorliegenden Erfindung vorgesehen, dass die Lichtführungseinheit mittels eines Halters an einer Lichtquellenbox festgelegt ist.

Die Erfindung wird nachfolgend anhand eines in der Zeichnung schematisch dargestellten Ausführungsbeispiels näher erläutert. In dieser zeigen
- Figur 1: eine perspektivische Schnittdarstellung einer Leuchteinheit gemäß der Linie I-I der Figur 2,
- Figur 2: eine Frontalansicht einer Leuchteinheit,
- Figur 3: eine Explosionsansicht einer Leuchteinheit von der Lichtquellenseite,
- Figur 4: eine Explosionsansicht einer Leuchteinheit in ihrer Anbausituation an einer Lichtquellenbox von der Abstrahlseite,
- Figur 5: eine perspektivische Ansicht einer erfindungsgemäßen Ausführungsform der erfindungsgemäßen Leuchteinheit teilweise im Schnitt,
- Figur 6: einen vertikalen Schnitt durch die Leuchteinheit gemäß der Linie VI-VI der Figur 2,
- Figur 7: eine Schnittdarstellung einer Lichtführung im Sinne eine Variante der vorliegenden Erfindung, und
- Figur 8: eine schematische Seitenansicht einer Leuchteinheit und einer dieser Leuchteinheit zugeordneten Linse.

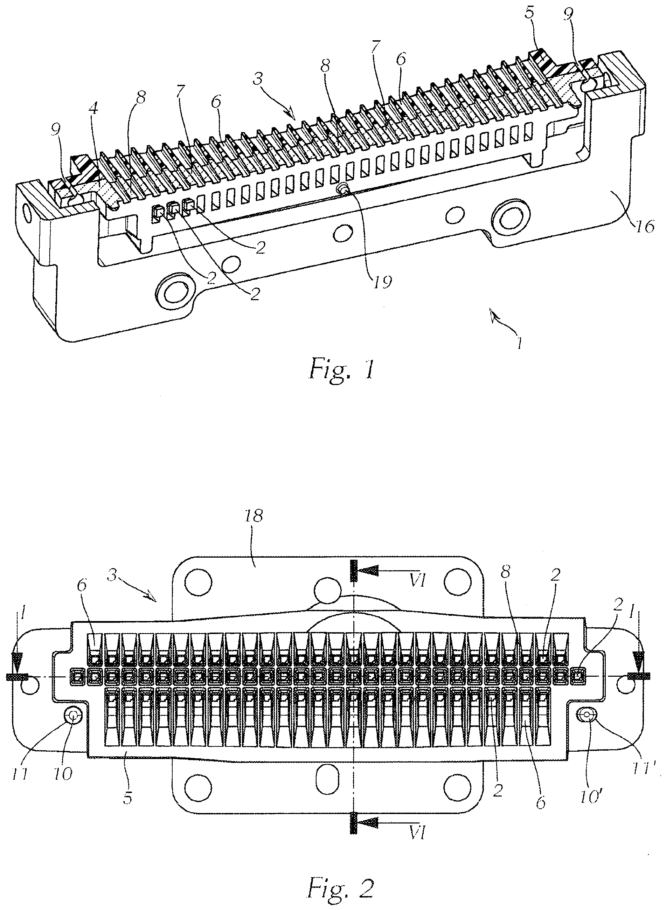

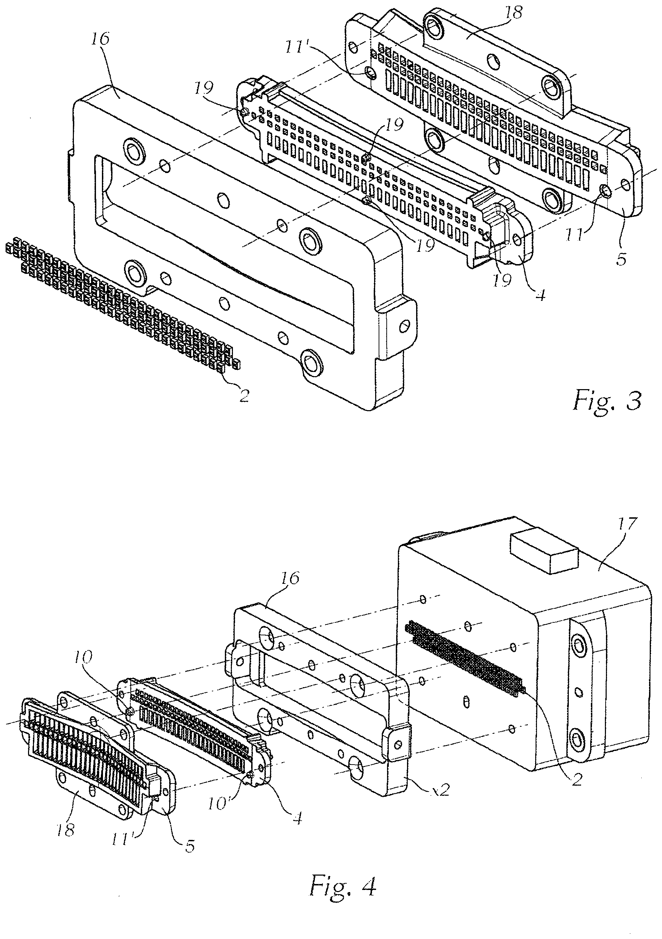

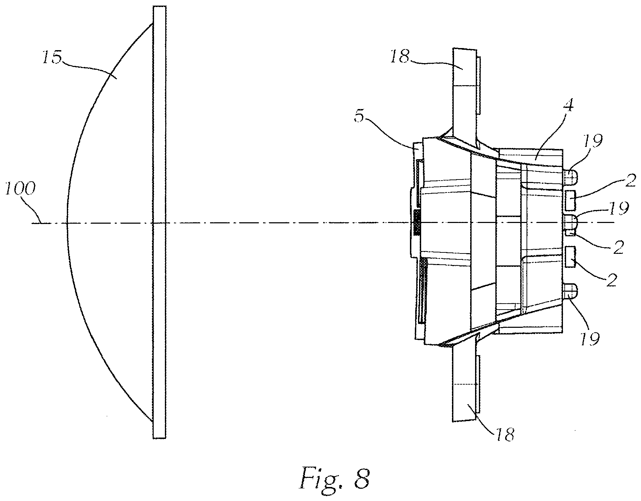

In Figur 1 ist eine Leuchteinheit mit 1 bezeichnet. Die Leuchteinheit 1 besteht im Wesentlichen aus einer Mehrzahl von Lichtquellen 2 und einer Lichtführungseinheit 3. Die Lichtführungseinheit 3 ist so aufgebaut, dass ein lichtquellenseitiger Teil 4 der Lichtführungseinheit 3 zwischen den Lichtquellen 2 und einem abstrahlseitigen Teil 5 der Lichtführungseinheit 3 angeordnet ist. Wesentlich ist hierbei lediglich, dass ein separater Teil 4 der Lichtführungseinheit 3 vorgesehen ist, sodass neben den definierten Teilen 4 und 5 auch noch weitere Teile vorgesehen sein können, die zusammen die Lichtführung ausbilden. Die Lichtführungen 6 sind je einer Lichtquelle 2 zugeordnet, wobei sich die Lichtführungen 6 sowohl im lichtquellenseitigen Teil 4 der Lichtführungseinheit 3 als auch im abstrahlseitigen Teil 5 der Lichtführungseinheit 3 erstrecken bzw. von diesen gebildet werden. Die Lichtquellen 2 können je einen oder auch mehrere LED-Chips aufweisen. In der Darstellung sind nur einige der Lichtquellen dargestellt, es ist jedoch offensichtlich, dass je eine Lichtführung 6 je einer Lichtquelle 2 zugeordnet ist. Die Lichtführungen 6 in dem Beispiel gemäß Figur 1 weisen mit Aluminium bedampfte Reflektorflächen 7 auf. In Figur 1 ist weiters zu erkennen, dass die Lichtquellen 2 unmittelbar nebeneinander angeordnet sind, weshalb auch die Reflektorwände 8 aneinander angrenzen müssen und daher sehr dünnwandig sind. Der Zusammenbau der Lichtführungseinheit 3 erfolgt durch Zusammensetzen und Ausrichten mittels der Festlegungsmittel 9. Es ist offensichtlich, dass praktisch jede Art der Verbindung, insbesondere durch Verrasten, Verschrauben oder auch Verkleben der beiden Teile 4 und 5 der Lichtführungseinheit 3 zielführend sein kann. Durch den geteilten Aufbau der Lichtführungseinheit 3 kann für den lichtquellenseitigen Teil 4 der Lichtführungseinheit 3 ein anderes Material gewählt werden als für den abstrahlseitigen Teil 5 der Lichtführungseinheit 3. Insbesondere werden für den lichtquellenseitigen Teil 4 besonders hitzebeständige Kunststoffe, bzw. andere Materialien mit großer Hitzebeständigkeit verwendet, während der abstrahlseitige Teil 5 zum Zwecke des zuverlässigen Gießens der dünnen Reflektorwände 8 aus besonders fließfähigen Thermoplasten hergestellt werden kann. Die beiden Teile 4, 5 der Lichtführungseinheit 3 sind in Figur 1 an einem optionalen Halter 16 festgelegt bzw. in diesem aufgenommen, der zur Festlegung der Teile an einer in Figur 4 dargestellten Lichtquellenbox 17 dient. Mit 19 ist ein Abstandshalter bezeichnet, der einen geeigneten Abstand zwischen dem lichtquellenseitiger Teil 4 der Lichtführungseinheit 3 und den Lichtquellen 2, die an der Lichtquellenbox 17 angeordnet sind, sicherstellt. In Figur 1 ist weiters ersichtlich, dass der lichtquellenseitige Teil 4 der Lichtführungseinheit 3 und der abstrahlseitige Teil 5 der Lichtführungseinheit 3 an gekrümmten und einander entsprechenden Flächen in ihrer relativen Position zueinander festgelegt sind. Diese Krümmung folgt der Bildfeldwölbung einer Linse 15, die in Figur 8 dargestellt ist.

In Figur 2 sind gleiche Teile mit gleichen Bezugszeichen benannt, wobei zu erkennen ist, dass in der Lichtführungseinheit 3 lichte Querschnitte ausgebildet sind, die die Lichtführungen 6 ausbilden. Um sicherzustellen, dass die beiden Teile 4 und 5 der Lichtführungseinheit 3 fluchtend zusammengesetzt werden und auch nach langem Betrieb stabil zueinander ausgerichtet bleiben, sind Referenzierstifte 10, 10' vorgesehen, die mit diesen zugeordneten, als Langlöcher ausgebildeten Referenzbohrungen 11, 11' zusammenwirken, wie dies insbesondere auch in der Darstellung gemäß den Figuren 3 und 4 zu erkennen ist. Die Referenzbohrung 11' ist in diesem Beispiel als Langloch ausgebildet, um thermische Verformungen der Teile 4 und 5 zu kompensieren. Mit 18 ist ein Flansch bezeichnet, der ebenfalls der Festlegung der Lichtführungseinheit 3 dient.

In Figur 3 sind wiederum Abstandshalter 19 am lichtquellenseitigen Teil 4 der Leuchteinheit 3 zu erkennen. Mit 11 und 11' sind Referenzbohrungen zur Aufnahme der in Figur 4 dargestellten Referenzierstifte 10 und 10' bezeichnet. Optional kann ein Halter 16 vorgesehen sein, der die Lichtführungseinheit 3 trägt. In Figur 4 ist weiters die Lichtquellenbox 17 dargestellt, an deren Außenseite die Lichtquellen 2 in Gruppen bzw. in einer Matrix angeordnet sind. Die Lichtquellenbox 17 enthält elektronische Schaltungen zur Ansteuerung der einzelnen Lichtquellen 2. Die Lichtquellenbox kann einzelne Lichtquellen 2 aus- und einschalten sowie die Lichtquellen 2 dimmen. Figur 4 kann weiters entnommen werden, dass die Abstrahlseite der Lichtführungseinheit 3 gekrümmt ist. Diese Krümmung folgt der Bildfeldwölbung einer Linse 15, die in Figur 8 dargestellt ist.

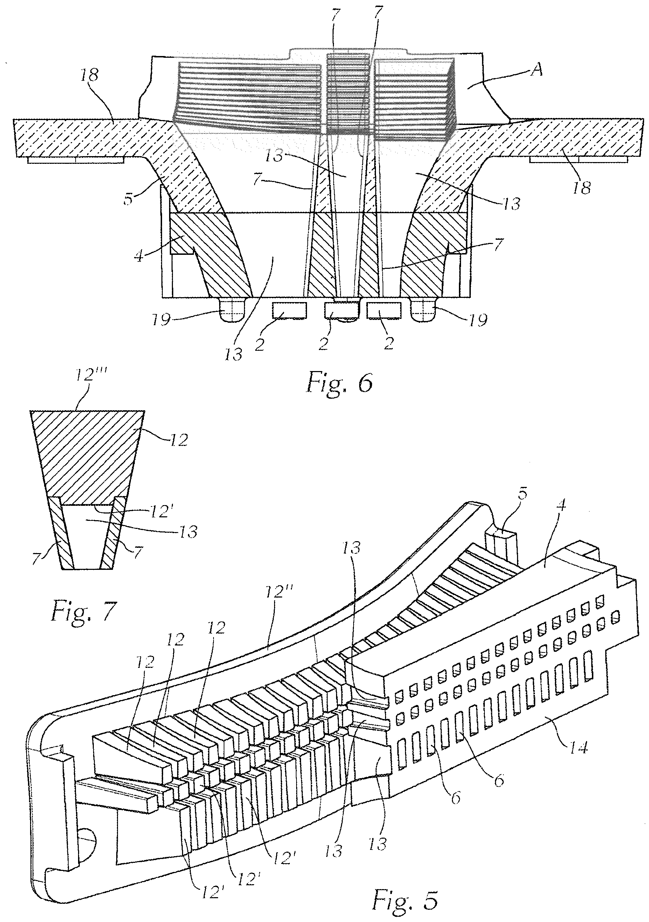

In Figur 5 ist die Erfindung gezeigt, bei der der abstrahlseitige Teil 5 der Leuchteinheit 3 Lichtleiter 12 aufweist, die zusammen mit den den Lichtleitern 12 zugeordneten Reflektoren 13 im lichtquellenseitigen Teil 4 der Lichtführungseinheit 3 die Lichtführungen 6 ausbilden. Die Lichtleiter 12 sind abstrahlseitig zu einer gemeinsamen abstrahlseitigen Stirnplatte 12" zusammengefasst, die eine gemeinsame Lichtauskoppelfläche der einzelnen Lichtführungen darstellt. Die lichtquellenseitige Oberfläche 14 des lichtquellenseitigen Teils 4 der Lichtführungseinheit 3 ist mit Aluminium bedampft und nicht reflektierend lackiert, um unkontrollierte Reflexionen, die Streulicht verursachen können, zu verhindern. In Fig. 5 ist weiters zu erkennen, dass die Lichtführungen 6, in diesem Fall bestehend aus Reflektoren 13 und Lichtleitern 12, in drei übereinander liegenden Reihen angeordnet sind, die mittels der Lichtquellenbox (17), welche die Lichtquellen 2 ansteuert, aktiviert werden können, wobei die Leuchtfunktionen eines Scheinwerfers, wie beispielsweise Abblendlicht, Fernlicht, Tagfahrlicht etc. durch einsprechende Schaltung der Reihen dargestellt werden. Beispielsweise sind für Fernlicht alle Reihen eingeschaltet. Durch gezieltes Abschalten einzelner Reihen können weitere Lichtverteilungen erzeugt werden. Die untere Reihe ist dabei für den Fernlichtanteil vorgesehen, die mittlere Reihe für den HD-Linienbereich und die obere Reihe beleuchtet das Vorfeld. Die Leuchtfunktionen sind in der Lichtführungseinheit seitenverkehrt und auch in vertikaler Richtung invertiert repräsentiert, da eine vollständige Umkehr des Lichtbildes durch die weiter unten besprochene nachgeordnete Linse erfolgt.

In Figur 6 ist eine Leuchteinheit dargestellt, bei der sich Reflektoren 13 bzw. Reflektorflächen 7 in beiden Teilen 4 und 5 der Lichtführungseinheit 3 erstrecken. Die Lichtquellen 2 strahlen Licht in die zusammengesetzten Reflektoren 13, welches an den mit Aluminium bedampften Reflektorflächen 7 reflektiert und entsprechend der Geometrie der Querschnitte der Reflektoren abgestrahlt wird. Weiters sind die Abstandshalter 19 am lichtquellenseitigen Teil 4 der Lichtführungseinheit 3 dargestellt, die in ihrer Erstreckung in Abstrahlrichtung im Wesentlichen den Maßen der Lichtquellen entsprechen und somit einen Freiraum definieren, in dem die Lichtquellen angeordnet sind. Da die einzelnen Lichtführungen 6 unterschiedliche Längen aufweisen, und die Lichtführungseinheit 3 folglich abstrahlseitig eine gekrümmte äußere Form aufweist, sind in dem Bereich, der mit A bezeichnet ist, die Endkanten weiterer, hinter der Schnittebene von Figur 6 liegender Lichtführungen 6 zu sehen.

In Figur 7 ist das Zusammenwirken eines Reflektors 13 und eines Lichtleiters 12 gemäß Figur 5 deutlicher dargestellt. Es ist ersichtlich, dass ein Lichtleiter 12 formschlüssig auf einen Reflektor 13 aufgesetzt ist, sodass die lichtquellenseitige Stirnfläche 12' des Lichtleiters direkt an den Bereich der beschichteten Reflektorflächen 7 anschließt. Der Lichtleiter 12 besteht bevorzugt aus einem transparenten Kunststoff, welcher ein optisch dichteres Medium darstellt als die den Lichtleiter 12 umgebende Luft, sodass es an den seitlichen Grenzflächen des Lichtleiters 12 zur Totalreflexion kommt. Das Licht wird darüber hinaus im optisch dichteren Medium zum Lot gebrochen und schließlich an der abstrahlseitigen Stirnfläche 12''' bzw. Lichtauskoppelfläche abgegeben.

In Figur 8 ist schematisch dargestellt, dass die Leuchteinheit 1 einer Linse 15 zugeordnet ist, wobei eine optische Achse mit 100 bezeichnet ist und die Leuchteinheit 1 beispielsweise auf Höhe der mittleren Reihe von Lichtführungen 5 schneidet.

## Patentansprüche

1. Leuchteinheit (1) für einen Scheinwerfer, insbesondere einen Fahrzeugscheinwerfer, bestehend aus einer Mehrzahl von Lichtquellen (2) und einer Lichtführungseinheit (3) mit einer Mehrzahl von Lichtführungen (6), wobei je eine Lichtführung (6) je einer Lichtquelle (2) zugeordnet ist und die Lichtführungseinheit (3) aus zumindest zwei miteinander verbindbaren Teilen (4, 5) besteht und ein lichtquellenseitiger Teil (4) der Lichtführungseinheit (3) in Abstrahlrichtung der Lichtführungseinheit (3) zwischen den Lichtquellen (2) und einem abstrahlseitigen Teil (5) der Lichtführungseinheit (3) angeordnet ist,
**dadurch gekennzeichnet, dass**
der lichtquellenseitige Teil (4) der Lichtführungseinheit (3) und der abstrahlseitige Teil (5) der Lichtführungseinheit (3) an gekrümmten und einander entsprechenden Flächen in ihrer relativen Position zueinander festgelegt sind,
wobei der abstrahlseitige Teil (5) der Lichtführungseinheit (3) eine Mehrzahl von Lichtleitern (12) aufweist.

2. Leuchteinheit nach Anspruch 1, **dadurch gekennzeichnet, dass** der lichtquellenseitige Teil (4) der Lichtführungseinheit (3) unmittelbar an die Lichtquellen (2) anschließt.

3. Leuchteinheit nach Anspruch 1 oder 2, **dadurch gekennzeichnet, dass** der lichtquellenseitige Teil (4) der Lichtführungseinheit (3) aus einem hitzebeständigeren Material als der abstrahlseitige Teil (5) der Lichtführungseinheit (3) gefertigt ist.

4. Leuchteinheit nach einem der Ansprüche 1 bis 3, **dadurch gekennzeichnet, dass** der abstrahlseitige Teil (5) der Lichtführungseinheit (3) aus einem fließfähigeren Thermoplast als der lichtquellenseitige Teil (4) der Lichtführungseinheit (3) gefertigt ist.

5. Leuchteinheit nach einem der Ansprüche 1 bis 4, **dadurch gekennzeichnet, dass** Reflektorflächen (7) der Lichtführungen (6) reflektierend beschichtet, insbesondere mit Aluminium beschichtet sind.

6. Leuchteinheit nach einem der Ansprüche 1 bis 5, **dadurch gekennzeichnet, dass** der lichtquellenseitige Teil (4) der Lichtführungseinheit (3) und der abstrahlseitige Teil (5) der Lichtführungseinheit (3) Festlegungsmittel (9) zum Festlegen der beiden Teile (4, 5) der Lichtführungseinheit (3) in ihrer relativen Position quer zur Abstrahlrichtung aufweisen.

7. Leuchteinheit nach einem der Ansprüche 1 bis 6, **dadurch gekennzeichnet, dass** der lichtquellenseitige Teil (4) der Lichtführungseinheit (3) Referenzierzapfen (10, 10') und der abstrahlseitige Teil (5) der Lichtführungseinheit (3) diesen zugeordnete Referenzbohrungen (11,11') aufweisen.

8. Leuchteinheit nach einem der Ansprüche 1 bis 7, **dadurch gekennzeichnet, dass** der lichtquellenseitige Teil (4) der Lichtführungseinheit (3) eine Mehrzahl von Lichtleitern (12) aufweist.

9. Leuchteinheit nach einem der Ansprüche 1 bis 8, **dadurch gekennzeichnet, dass** die Lichtleiter (12) aus einem transparenten Kunststoff gefertigt sind.

10. Leuchteinheit nach einem der Ansprüche 1 bis 9, **dadurch gekennzeichnet, dass** je ein Lichtleiter (12) je einer Lichtführung (6), insbesondere einem Reflektor (13) zugeordnet ist.

11. Leuchteinheit nach einem der Ansprüche 9 bis 10, **dadurch gekennzeichnet, dass** die Lichtleiter einen abgesetzten Endbereich aufweisen, der in die entsprechenden Reflektoren (13) eingreift.

12. Leuchteinheit nach einem der Ansprüche 1 bis 11, **dadurch gekennzeichnet, dass** die den Lichtführungen (6) zugeordneten Lichtleiter (12) abstrahlseitig zu einer gemeinsamen abstrahlseitigen Stirnplatte (12") zusammengefasst sind.

13. Leuchteinheit nach einem der Ansprüche 1 bis 12, **dadurch gekennzeichnet, dass** eine lichtquellenseitige Oberfläche (14) des lichtquellenseitigen Teils (4) der Lichtführungseinheit (3) mit Aluminium beschichtet und nicht reflektierend lackiert ist.

14. Leuchteinheit nach einem der Ansprüche 1 bis 13, **dadurch gekennzeichnet, dass** die Lichtführungseinheit (3) mittels eines Halters (16) an einer Lichtquellenbox (17) festgelegt ist.

## Claims

1. A lighting unit (1) for a headlight, in particular a vehicle headlight, consisting of a plurality of light sources (2) and a light-guiding unit (3) having a plurality of light guides (6), wherein each light guide (6) is assigned a light source (2) and the light-guiding unit (3) consists of at least two interconnectable parts (4, 5), and a light-source-side part (4) of the light-guiding unit (3) is arranged in the emission direction of the light-guiding unit (3) between the light sources (2) and an emission-side part (5) of the light-guiding unit (3), **characterised in that** the light-source side part (4) of the light-guiding unit (3) and the emission-side part (5) of the light-guiding unit (3) are fastened, in the position thereof relative to one another, at curved surfaces corresponding to one another, wherein the emission-side part (5) of the light-guiding unit (3) has a plurality of optical waveguides (12).

2. The lighting unit according to Claim 1, **characterised in that** the light-source-side part (4) of the light-guiding unit (3) directly adjoins the light sources (2).

3. The lighting unit according to Claim 1 or 2, **characterised in that** the light-source-side part (4) of the light-guiding unit (3) is fabricated from a material that is more heat resistant than the emission-side part (5) of the light-guiding unit (3).

4. The lighting unit according to one of Claims 1 to 3, **characterised in that** the emission-side part (5) of the light-guiding unit (3) is fabricated from a more flowable thermoplastic than the light-source-side part (4) of the light-guiding unit (3).

5. The lighting unit according to one of Claims 1 to 4, **characterised in that** reflector surfaces (7) of the light guides (6) are coated in a reflecting manner, in particular are coated with aluminium.

6. The lighting unit according to one of Claims 1 to 5, **characterised in that** the light-source-side part (4) of the light-guiding unit (3) and the emission-side part (5) of the light-guiding unit (3) have fastening means (9) for fastening the two parts (4, 5) of the light-guiding unit (3) transversely to the emission direction in the relative position of said two parts.

7. The lighting unit according to one of Claims 1 to 6, **characterised in that** the light-source-side part (4) of the light-guiding unit (3) has referencing pins (10, 10') and the emission-side part (5) of the lighting unit (3) has reference bores (11, 11') assigned to said referencing pins.

8. The lighting unit according to one of Claims 1 to 7, **characterised in that** the light-source-side part (4) of the light-guiding unit (3) has a plurality of optical waveguides (12).

9. The lighting unit according to any of the preceding claims, **characterised in that** the optical waveguides (12) are fabricated from a transparent plastic.

10. The lighting unit according to one of Claims 1 to 9, **characterised in that** each optical waveguide (12) is assigned to a light guide (6), in particular a reflector (13).

11. The lighting unit according to one of Claims 9 to 10, **characterised in that** the optical waveguides have a stepped end region, which engages with the corresponding reflectors (13).

12. The lighting unit according to one of Claims 1 to 11, **characterised in that** the optical waveguides (12) assigned to the light guides (6) are combined on the emission side in order to form a common emission-side end plate (12").

13. The lighting unit according to one of Claims 1 to 12, **characterised in that** a light-source-side surface (14) of the light-source-side part (4) of the light-guiding unit (3) is coated with aluminium and is painted in a non-reflecting manner.

14. The lighting unit according to one of Claims 1 to 13, **characterised in that** the light-guiding unit (3) is fastened on a light source box (17) by means of a mount (16).

## Revendications

1. Unité d'éclairage (1) pour un phare, en particulier un phare de véhicule, composé d'une pluralité de sources lumineuses (2) et d'une unité de guidage de lumière (3) ayant une pluralité de guides de lumière (6), chaque guide de lumière (6) étant associé à une source lumineuse (2) et l'unité de guidage de lumière (3) étant composée d'au moins deux parties (4, 5), aptes à être reliées l'une à l'autre, et une partie (4) de l'unité de guidage de lumière (3) côté sources lumineuses étant disposée dans la direction d'émission de l'unité de guidage de lumière (3) entre les sources lumineuses (2) et une partie (5) de l'unité de guidage de lumière (3) côté émission, **caractérisée par le fait que** la partie (4) de l'unité de guidage de lumière (3) côté sources lumineuses et la partie (5) de l'unité de guidage de lumière (3) côté émission sont fixées dans leur position relative au niveau de surfaces courbes et correspondant l'une à l'autre, où **le fait que** la partie (5) de l'unité de guidage de lumière (3) côté émission présente une pluralité de guides d'ondes optiques (12).

2. Unité d'éclairage selon la revendication 1, **caractérisée par le fait que** la partie (4) de l'unité de guidage de lumière (3) côté sources lumineuses est directement raccordé aux sources lumineuses (2).

3. Unité d'éclairage selon l'une des revendications 1 ou 2, **caractérisée par le fait que** la partie (4) de l'unité de guidage de lumière (3) côté sources lumineuses est fabriquée à partir d'une matière résistant plus à la chaleur que la partie (5) de l'unité de guidage de lumière (3) côté émission.

4. Unité d'éclairage selon l'une des revendications 1 à 3, **caractérisée par le fait que** la partie (5) de l'unité de guidage de lumière (3) côté émission est fabriquée à partir d'une matière thermoplastique plus apte à s'écouler que la partie (4) de l'unité de guidage de lumière (3) côté sources lumineuses.

5. Unité d'éclairage selon l'une des revendications 1 à 4, **caractérisée par le fait que** des surfaces réflectrices (7) des guides de lumière (6) sont revêtues de manière réfléchissante, en particulier revêtues par de l'aluminium.

6. Unité d'éclairage selon l'une des revendications 1 à 5, **caractérisée par le fait que** la partie (4) de l'unité de guidage de lumière (3) côté sources lumineuses et la partie (5) de l'unité de guidage de lumière (3) côté émission présentent des moyens de fixation (9) pour la fixation des deux parties (4, 5) de l'unité de guidage de lumière (3) dans leur position relative transversalement à la direction d'émission.

7. Unité d'éclairage selon l'une des revendications 1 à 6, **caractérisée par le fait que** la partie (4) de l'unité de guidage de lumière (3) côté sources lumineuses présente des broches de référence (10, 10') et la partie (5) de l'unité de guidage de lumière (3) côté émission présente des alésages de référence (11, 11'), associés à ceux-ci.

8. Unité d'éclairage selon l'une des revendications 1 à 7, **caractérisée par le fait que** la partie (4) de l'unité de guidage de lumière (3) côté sources lumineuses présente une pluralité de guides d'ondes optiques (12) .

9. Unité d'éclairage selon l'une des revendications 1 à 9, **caractérisée par le fait que** les guides d'ondes optiques (12) sont fabriqués à partir d'une matière plastique transparente.

10. Unité d'éclairage selon l'une des revendications 1 à 10, **caractérisée par le fait que** chaque guides d'ondes optiques (12) est associé à un guide de lumière (6), en particulier un réflecteur (13).

11. Unité d'éclairage selon l'une des revendications 9 et 10, **caractérisée par le fait que** les guides d'ondes optiques présentent une région d'extrémité étagée, laquelle s'engage dans les réflecteurs (13) correspondants.

12. Unité d'éclairage selon l'une des revendications 1 à 11, **caractérisée par le fait que** les guides d'ondes optiques (12) associés aux guides de lumière (6) sont combinés côté émission pour former une plaque frontale (12") côté émission, commune.

13. Unité d'éclairage selon l'une des revendications 1 à 12, **caractérisée par le fait qu'**une surface (14) côté sources lumineuses de la partie (4) de l'unité de guidage de lumière (3) côté sources lumineuses est revêtue par de l'aluminium et est peinte de manière non réfléchissante.

14. Unité d'éclairage selon l'une des revendications 1 à 13, **caractérisée par le fait que** l'unité de guidage de lumière (3) est fixée sur une boîte de sources lumineuses (17) au moyen d'une monture (16).
